# EUROPEAN PATENT APPLICATION

(11) **EP 4 815 152 A1**
(43) Date of publication of application: **30.09.2026**
(21) Application number: 26164909.9
(22) Date of filing: 16.03.2026
(51) Int. Cl.: H01M 50/291, H01M 50/35, B60K 1/04, H01M 50/249

(54) **VEHICLE STRUCTURE**

(30) Priority: 26.03.2025 JP 2025052468
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); TAKAHASHI, Isao, Toyota-shi, Aichi-ken, 471-8571 (JP)
(74) Representative: TBK

(57) **Abstract**

A vehicle structure including plural storage battery modules, each including plural storage battery cells arranged in a row along a first direction, the plurality of storage battery modules being arranged with a spacing with respect to each other in a second direction orthogonal to the first direction, a channel member configuring part of a smoke discharge channel allowing a flow of smoke generated from the storage battery cells, a reinforcement member extends along the first direction in the spacing between the storage battery modules and that has an interior in communication with the smoke discharge channel at a one-end and an other-end of the reinforcement member, and joining members that are disposed at the one-end and the other-end of the reinforcement member, and that each include a first join face joined to the channel member and a second join face joined to the reinforcement member.

## Description

### BACKGROUND

### Technical Field

The present disclosure relates to a vehicle structure.

### Related Art

Japanese Patent No. 7259673 describes a battery pack including a battery module including plural battery cells, a cooler that cools the battery cells, and a smoke discharge channel allowing a flow of gas discharged from the battery cells.

In a vehicle including storage battery modules installed to a vehicle and each configured by a row of plural storage battery cells, sometimes a reinforcement member is arranged between the plural storage battery modules. There is a demand to utilize such reinforcement members efficiently.

### SUMMARY

A vehicle structure of a first aspect includes plural storage battery modules, each including plural storage battery cells arranged in a row along a first direction, the plurality of storage battery modules being arranged with a spacing with respect to each other in a second direction orthogonal to the first direction, a channel member configuring part of a smoke discharge channel allowing a flow of smoke generated from the storage battery cells, a reinforcement member that extends along the first direction in the spacing between the storage battery modules and that has an interior in communication with the smoke discharge channel at a one-end and an other-end of the reinforcement member, and joining members that are disposed at the one-end and the other-end of the reinforcement member, and that each include a first join face joined to the channel member and a second join face joined to the reinforcement member.

In the vehicle structure of the first aspect, the storage battery cells are arranged in the storage battery module in a row along the first direction, and the storage battery modules are arranged in a row along the second direction. This thereby enables the plural storage battery cells to be arranged efficiently in both the first direction and the second direction.

Any smoke generated from the storage battery cells inflows into the smoke discharge channel configured by the channel member. The smoke inside the smoke discharge channel is, for example, discharged from a smoke discharge vent. Moreover, in such a vehicle structure, the reinforcement member is provided extending in the first direction in the spacings between the plural storage battery modules. The one-end and the other-end of the reinforcement member are joined to the channel member by the joining member. The interior of the reinforcement member is in communication with the smoke discharge channel at the one-end and the other-end thereof. This means that any smoke that has inflowed into the smoke discharge channel also flows in the interior of the reinforcement member. Due to the interior of the reinforcement member acting as the smoke discharge channel, the reinforcement member can be utilized efficiently.

The first join face of the joining member is joined to the channel member, and the second join face of the joining member is joined to the reinforcement member. The joining member is joined in a state of face-to-face contact with both the channel member and the reinforcement member, enabling the channel member and the reinforcement member to be coupled together strongly by the joining member.

A second aspect is the vehicle structure of the first aspect, wherein first join faces are provided as a pair joined to the channel member at both second direction sides of the reinforcement member.

In the vehicle structure of the second aspect, the joining member can be joined to the channel member by the first join faces at both second direction sides of the reinforcement member, enabling the joining member to be joined to the channel member more strongly than a structure joined on one side only.

A third aspect is a vehicle structure of the second aspect, wherein the joining members each include an opening that communicates the interior of the reinforcement member between the first join faces, provided as a pair, with the smoke discharge channel.

The vehicle structure of the third aspect enables smoke to flow from the interior of the reinforcement member into the smoke discharge channel through the opening. The interior of the reinforcement member also operates as the smoke discharge channel. The opening is provided between the first join faces provided as a pair, and the first join faces are positioned on both sides of the opening, enabling a state in which the interior of the reinforcement member and the smoke discharge channel are in communication with each other through the opening to be reliably maintained.

A fourth aspect is the vehicle structure of any one of the first to third aspects, wherein second join faces are provided as a pair joined to the reinforcement member at both second direction sides of the reinforcement member.

In the vehicle structure of the fourth aspect, the joining member can be joined to the reinforcement member by the second join face at both second direction sides of the reinforcement member, enabling the joining member to be joined to the reinforcement member more strongly than in a structure joined on one side only.

### BRIEF DESCRIPTION OF THE DRAWINGS

Exemplary embodiments of the present disclosure will be described in detail based on the following figures, wherein:
Fig. 1 is a plan view illustrating a vehicle structure of a first exemplary embodiment;
Fig. 2 is a perspective view illustrating a vehicle storage battery pack and a smoke discharge structure of a vehicle structure of a first exemplary embodiment;
Fig. 3 is a perspective view illustrating a smoke discharge structure of a vehicle structure of the first exemplary embodiment;
Fig. 4 is a cross-section illustrating a vehicle structure of the first exemplary embodiment, sectioned along a vehicle front-rear direction;
Fig. 5 is a cross-section illustrating a vehicle structure of the first exemplary embodiment, sectioned along a vehicle width direction
Fig. 6 is a cross-section illustrating an enlargement of a vehicle structure of the first exemplary embodiment, sectioned along the vehicle front-rear direction;
Fig. 7 is a cross-section illustrating an enlargement of a vehicle structure of the first exemplary embodiment, sectioned along the vehicle width direction;
Fig. 8 is a perspective view illustrating an enlargement of part of a vehicle structure of the first exemplary embodiment;
Fig. 9 is a perspective view illustrating an enlargement of part of a vehicle structure of the first exemplary embodiment; and
Fig. 10 is a cross-section illustrating a vehicle structure of the first exemplary embodiment, sectioned along the vehicle front-rear direction.

### DETAILED DESCRIPTION

Description follows regarding a vehicle structure of a first exemplary embodiment of the present disclosure, with reference to the drawings. Note that description will mainly focus on areas needed to explain a scope of technology disclosed herein, and areas omitted from explanation are known technology. The same or similar reference numerals will be appended across the drawings to the same or equivalent members, and explanation thereof will be omitted. Furthermore, when plural of the same or equivalent members are included in the drawings, in order to enhance drawing clarity, sometimes reference numerals are only appended to some thereof. Arrow FR, arrow UP, and arrow LH in the drawings respectively indicate vehicle forward, vehicle upward, and vehicle leftward directions of a vehicle 10. When front and rear, up and down, and left and right directions are employed in the following description without particular explanation thereof, then these respectively indicate front and rear in the vehicle front-rear direction, up and down in the vehicle height direction, and left and right in the vehicle width direction (left-right direction).

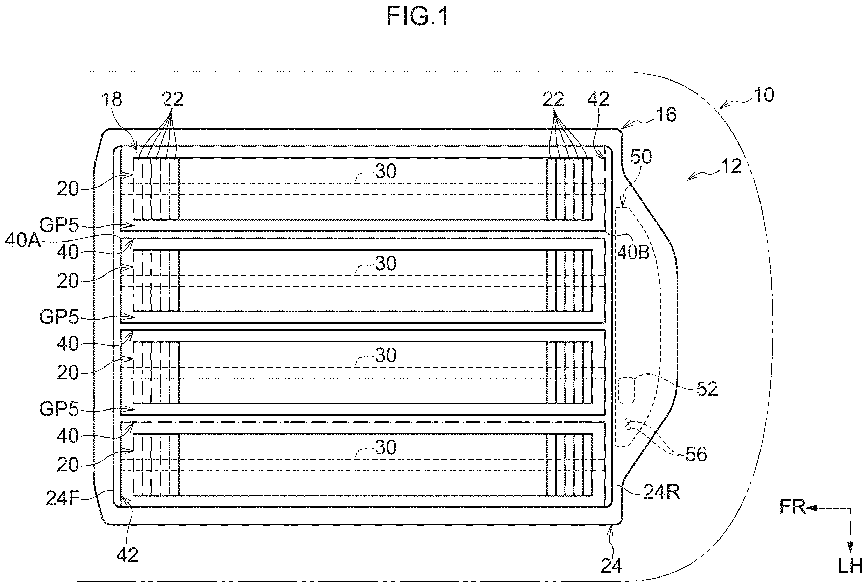

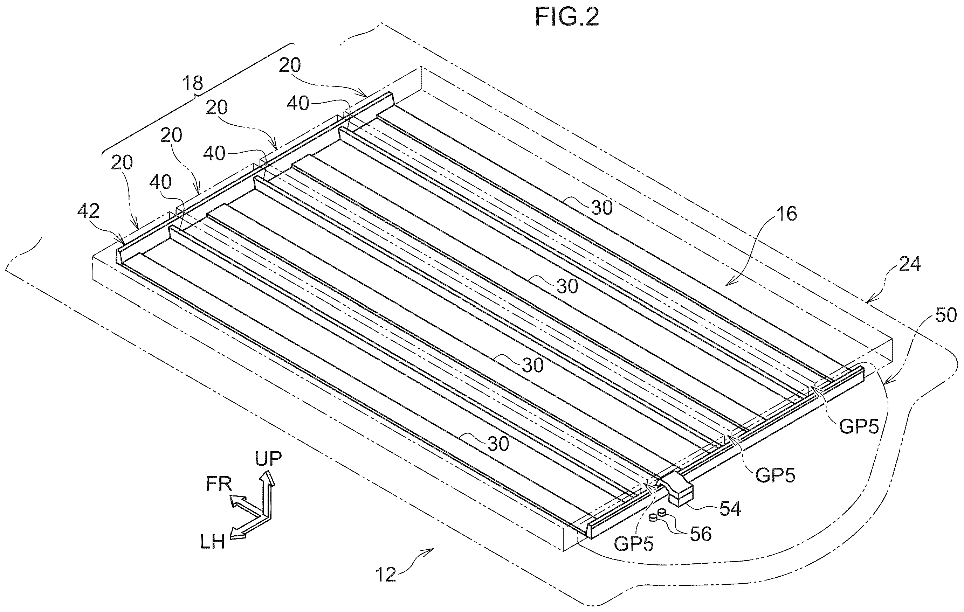

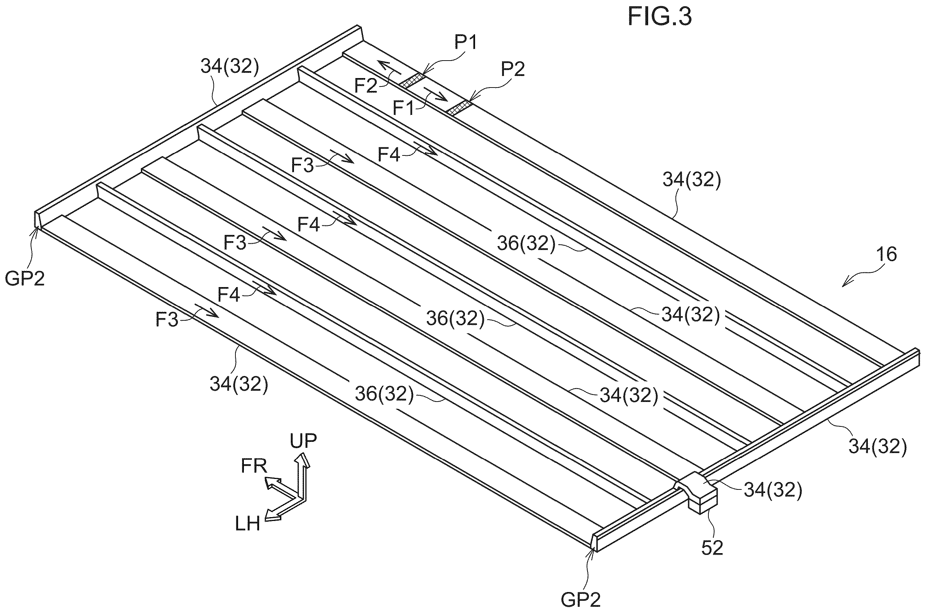

Fig. 1 is a schematic plan view illustrating parts of the vehicle 10 provided with a vehicle structure 12 of the first exemplary embodiment. Fig. 2 is a schematic perspective view illustrating a storage battery pack 18 and a smoke discharge structure 16 of the vehicle structure 12 of the first exemplary embodiment. Fig. 3 is a perspective view illustrating a first smoke discharge channel 34 and a second smoke discharge channel 36 configuring the smoke discharge structure 16, as extracted from other configuration.

As illustrated in Fig. 1, the storage battery pack 18 is installed to the vehicle 10. The storage battery pack 18 includes, as illustrated in Fig. 2, plural (four in the present exemplary embodiment) storage battery modules 20. The plural storage battery modules 20 are arranged alongside each other in the vehicle width direction. Gaps GP5 are configured between the storage battery modules 20. There are four of the storage battery modules 20 in the present exemplary embodiment, and so this means that there are three of the gaps GP5 configured between the storage battery modules 20.

The storage battery modules 20 each include plural storage battery cells 22. The plural storage battery cells 22 are arranged in the storage battery modules 20 in a row along the vehicle front-rear direction. Namely, the storage battery pack 18 is configured by plural storage battery modules 20 arranged alongside each other in the vehicle width direction, with each of the storage battery modules 20 including plural storage battery cells 22 arranged in a row along the vehicle front-rear direction. The vehicle front-rear direction is an example of a first direction in the technology disclosed herein, and the vehicle width direction is similarly an example of a second direction in the technology disclosed herein.

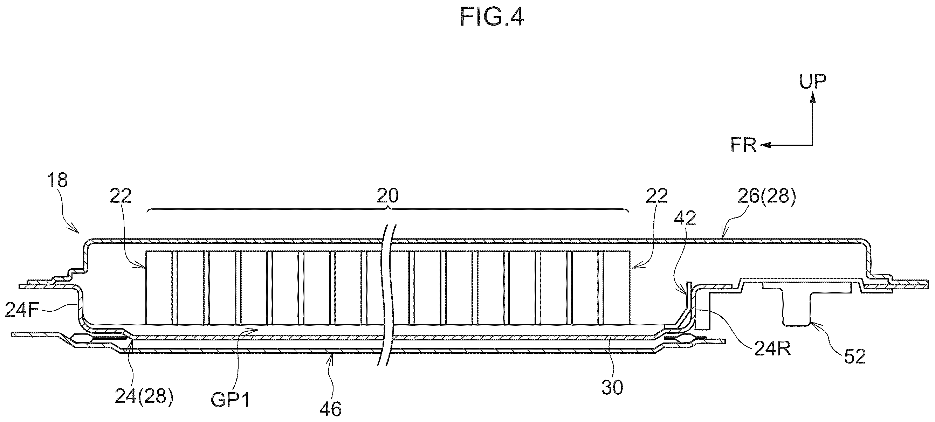

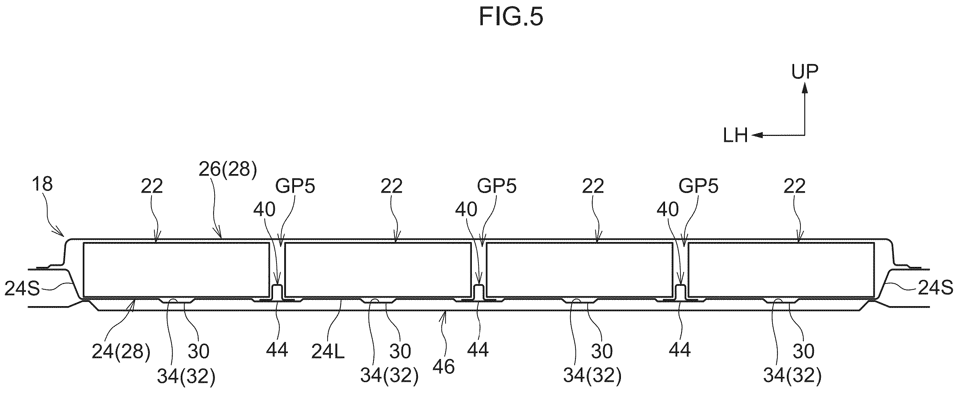

As illustrated in Fig. 4 and Fig. 5, the storage battery pack 18 includes a lower case 24 and an upper cover 26. The lower case 24 is a box-shaped member capable of housing the storage battery modules 20 and includes a lower plate 24L, a front plate 24F, a rear plate 24R, and a left-right pair of side plates 24S. The lower plate 24L is a plate-shaped region that supports the storage battery modules 20 from below. The front plate 24F and the rear plate 24R are each plate-shaped regions respectively provided so as to project upward from the front side and the rear side of the lower plate 24L. The side plates 24S are plate-shaped regions provided so as to project upward from the two vehicle width direction sides of the lower plate 24L. The upper face of the lower case 24 is open.

The upper cover 26 is a lid-shaped member for closing off the upper face of the lower case 24. A storage battery case 28 is configured by the lower case 24 and the upper cover 26, with a periphery of the lower case 24 and a periphery of the upper cover 26 joined together. The plural storage battery modules 20, each configured by the plural storage battery cells 22, are housed in the space inside the storage battery case 28 arranged alongside each other in the vehicle width direction.

A shared panel 46 is arranged at a lower side of the storage battery pack 18. In the present exemplary embodiment, the shared panel 46 covers the lower face of the storage battery pack 18, and protects the storage battery modules 20 from foreign objects and the like coming from the road surface.

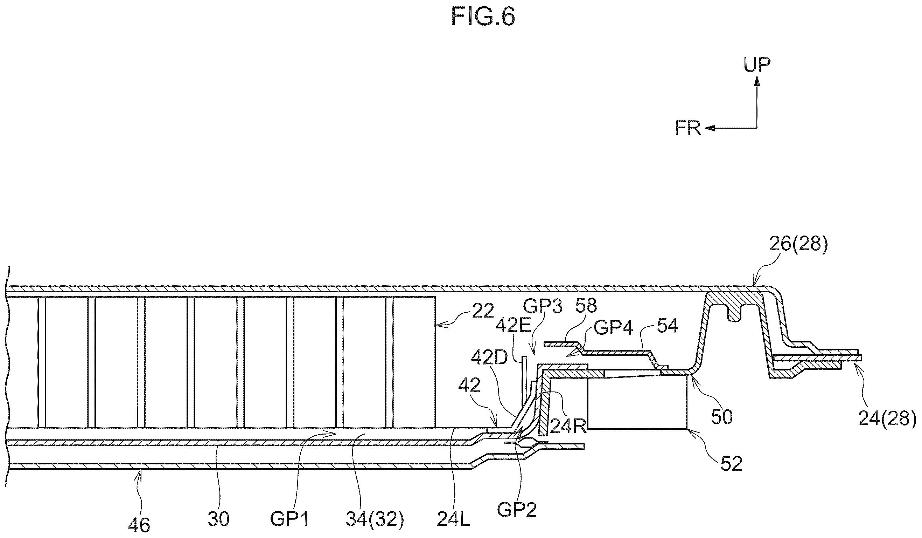

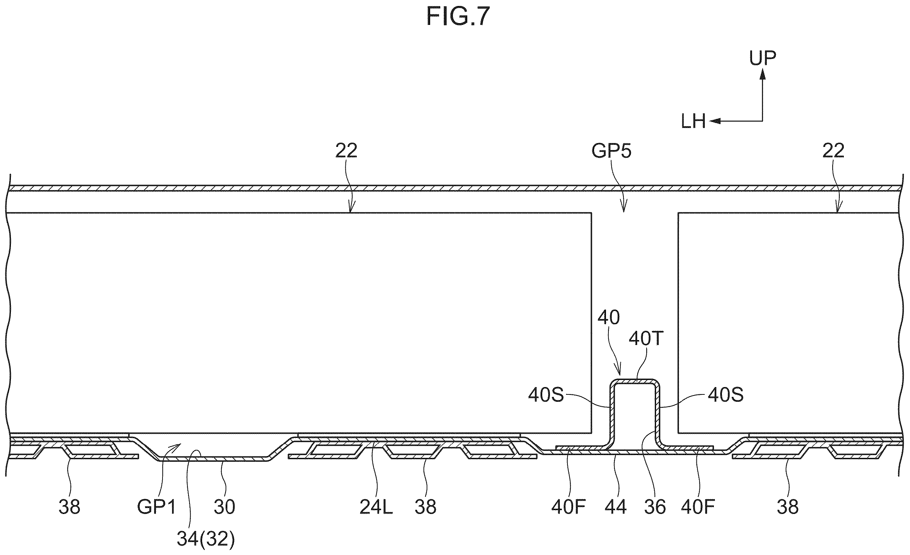

As illustrated in Fig. 6 and Fig. 7, the lower plate 24L of the lower case 24 is bonded to the lower face of each of the storage battery cells 22 using an adhesive. Plural downward protrusions 30 (the same number thereof as the number of storage battery modules 20) are formed to the lower plate 24L. The downward protrusions 30 each project downward at a vehicle width direction central position of the respective storage battery module 20. A gap GP1 is configured at each of the downward protrusions 30 where the lower case 24 is locally separated from the lower face of the storage battery cells 22. The downward protrusions 30 are formed at each of the storage battery modules 20 so as to extend along the vehicle front-rear direction, namely along the storage battery cell 22 row direction. A vehicle front-rear direction length of the downward protrusions 30 is about the same as the vehicle front-rear direction length of the storage battery modules 20, and the downward protrusions 30 extend contiguously along the vehicle front-rear direction from a vicinity of the front plate 24F to a vicinity of the rear plate 24R.

Part of the first smoke discharge channel 34 is configured by the gaps GP1 resulting from the downward protrusions 30 being separated from the lower faces of the storage battery cells 22 in this manner. Configuration is such that, in cases in which gas containing smoke (hereafter such gas is simply referred to as "smoke") has been generated in the storage battery cells 22 due to some reason or other, such smoke is discharged from a vehicle width direction central position on the lower faces of the storage battery cells 22. This means that the smoke generated by the storage battery cells 22 inflows into the gaps GP1 configured by the downward protrusions 30. The lower case 24 is an example of a first channel member configuring the first smoke discharge channel 34.

As illustrated in Fig. 7, coolers 38 are provided to the lower case 24. The coolers 38 configure coolant channels extending along the vehicle front-rear direction on the lower face of the lower case 24, at the two vehicle width direction sides of the respective downward protrusions 30. The heat of the coolers 38 is transmitted to coolant flowing in the coolant channels, enabling the storage battery cells 22 to be cooled.

As illustrated in Fig. 1, Fig. 2, Fig. 5, and Fig. 7, the reinforcement members 40 are arranged in the respective gaps GP5 between the storage battery modules 20. As illustrated in Fig. 7, when viewed in a vehicle width direction cross-section, the reinforcement members 40 include an upper plate 40T, side plates 40S, and flange plates 40F. The upper plate 40T is a plate shaped region forming an upper portion of the reinforcement member 40. The side plates 40S extend respectively downward from the two vehicle width direction sides of the upper plate 40T, and are plate-shaped regions provided as a pair separated from each other in the vehicle width direction. The flange plates 40F are flanges extending outward from the respective side plates 40S in the vehicle width direction. The reinforcement members 40 are each accordingly configured with a substantially hat shaped cross-section profile opening downward. The reinforcement members 40 are rod shaped member extending in the vehicle front-rear direction. The reinforcement members 40 are also reinforcement bars.

As illustrated in Fig. 1, the reinforcement members 40 each have a length that reaches the vicinities of the front plate 24F and the rear plate 24R of the lower case 24. This means that the reinforcement members 40 extend in the vehicle front-rear direction over the range of the storage battery modules 20. Length direction front ends 40A and rear ends 40B of the reinforcement members 40 are open. The front end 40A (see Fig. 1) of each of the reinforcement members 40 and the rear end 40B thereof are joined to the front plate 24F and the rear plate 24R of the lower case 24 by respective joining members 42. The reinforcement members 40 thereby reinforce the storage battery pack 18.

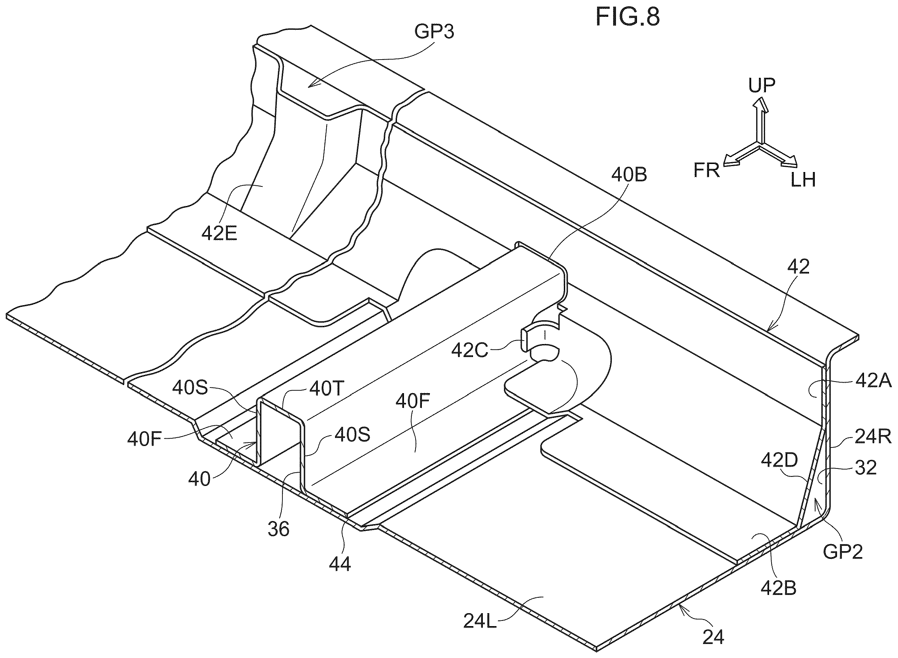

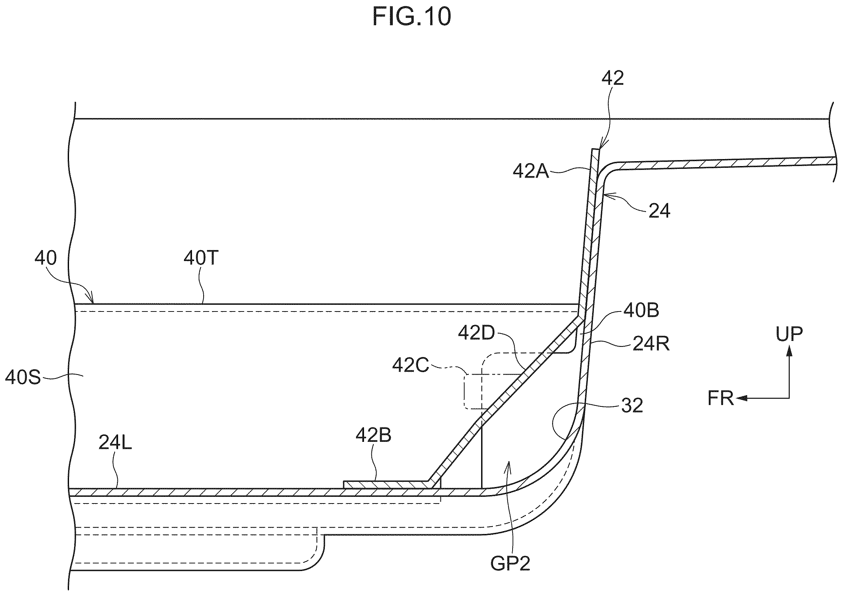

Note that although Fig. 8 to Fig. 10 illustrate a section where the rear end 40B of the reinforcement member 40 is joined to the rear plate 24R, a section where the front end 40A of the reinforcement member 40 is joined to the front plate 24F has a similar structure. As illustrated in Fig. 1 and Fig. 2, the joining members 42 are each contiguous in the vehicle width direction so as to span plural of the reinforcement members 40. Namely, at the vehicle front side, the front end 40A sides of plural of the reinforcement members 40 are joined to the lower case 24 by a single joining member 42. Similarly at the vehicle rear side, the rear ends 40B of plural of the reinforcement members 40 are joined to the lower case 24 by a single joining member 42.

The joining members 42 each include first join faces 42A, 42B, and second join faces 42C. The first join faces 42A, 42B are regions where there is face-to-face contact with the lower case 24. Specifically, the first join faces 42A are regions where there is face-to-face contact with the front plate 24F or the rear plate 24R of the lower case 24, and the first join faces 42B are regions where there is face-to-face contact with the lower plate 24L. The second join faces 42C are regions where there is face-to-face contact with the side plates 40S of the reinforcement member 40.

The joining member 42 includes first separation sections 42D between the first join faces 42A and the first join faces 42B. The first separation sections 42D are formed inclined when viewed in vehicle front-rear direction cross-section, and gaps GP2 are formed between the first separation sections 42D and the lower case 24. The gaps GP2 are each contiguous in the vehicle width direction, and are in communication with the first smoke discharge channel 34 configured by the respective downward protrusions 30. Namely, the gaps GP2 form part of the first smoke discharge channel 34. The joining members 42 are each an example of a first channel member configuring the first smoke discharge channel 34.

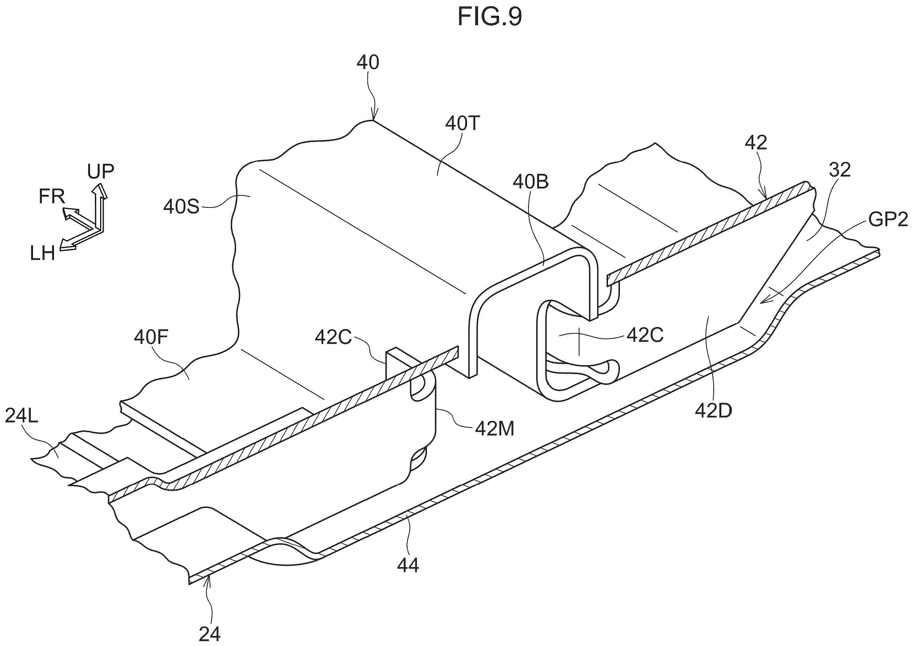

As illustrated in Fig. 9, openings 42M are formed to the joining members 42 so as to correspond to the front ends 40A or rear ends 40B of the reinforcement members 40. The openings 42M communicate the interior of the reinforcement members 40 with a smoke discharge channel 32 configured by the first separation sections 42D.

The joining member 42 are contiguous in the vehicle width direction and each includes the first join faces 42A, 42B and the second join faces 42C positioned at the two vehicle width direction sides of the respective reinforcement members 40. In other words, the first join faces 42A, 42B and the second join faces 42C are provided at the two vehicle width direction sides of the respective reinforcement members 40. The joining members 42 are rod shaped members extending in the vehicle width direction. The joining member 42 is a joining bar.

As illustrated in Fig. 7, cell pedestals 44 are formed to the lower plate 24L of the lower case 24 at positions corresponding to the reinforcement members 40. The cell pedestals 44 are each a region where the lower plate 24L of the lower case 24 is formed as a downward protrusion at a position corresponding to the reinforcement member 40. The cell pedestals 44 are joined to the flange plates 40F of the reinforcement members 40, and close off opening sections at the lower side of the reinforcement members 40. In contrast thereto, the front ends 40A and the rear ends 40B of the reinforcement members 40 are open (see Fig. 1) and are in communication with the gaps GP2. Namely, a section of closed cross-section profile (closed profile in vehicle width direction cross-section) configured by the reinforcement members 40 and the cell pedestals 44 is in communication with the first smoke discharge channel 34 configured by the gaps GP2. The closed cross-section profiles configured by the reinforcement members 40 and the cell pedestals 44 form part of the second smoke discharge channel 36. Namely, the reinforcement members 40 and the cell pedestals 44 are an example of a second channel member. In the present exemplary embodiment, parts of the lower case 24 also double as the cell pedestals 44.

As illustrated in Fig. 1, a connector block 50 is arranged at a vehicle rear side of the lower case 24. The connector block 50 is an example of a retaining member.

A smoke discharge vent 52 is attached to the connector block 50. A cover plate 54 (see Fig. 2) is attached to the connector block 50 and, between itself and the connector block 50, configures part of the smoke discharge channel 32 from the storage battery pack 18 to the smoke discharge vent 52.

As illustrated in Fig. 6, an upward protrusion 58 is formed to the cover plate 54. The upward protrusion 58 has a profile in which a vehicle width direction central portion thereof is curved upward in the vicinity of the vehicle front side. A gap GP4 is configured between the cover plate 54 and the lower case 24 due to forming the upward protrusion 58. The gap GP4 enables smoke to move in the vehicle front-rear direction, and forms part of the first smoke discharge channel 34. The cover plate 54 is an example of a first channel member configuring the first smoke discharge channel 34.

A second separation portion 42E is provided to the joining member 42 arranged at the vehicle rear side from out of the two joining members 42. The second separation portion 42E is formed at a position in the vehicle width direction corresponding to the upward protrusion 58. As illustrated in Fig. 8, the second separation portion 42E is separated from the rear plate 24R of the lower case 24 and is contiguous to the first separation section 42D. A gap GP3 is configured between the second separation portion 42E and the rear plate 24R of the lower case 24. This means that the first smoke discharge channel 34 inside the storage battery pack 18 is formed so as to be contiguous from the gaps GP1 between the downward protrusions 30 and the lower faces of the storage battery cells 22, to the smoke discharge vent 52, via the gap GP2 between the second separation portion 42E and the rear plate 24R of the lower case 24, via the gap GP3 between the second separation portion 42E and the rear plate 24R of the lower case 24, and via the gap GP4 between the cover plate 54 and the lower case 24. The second smoke discharge channel 36 configured by the reinforcement members 40 and the cell pedestals 44 is in communication with the first smoke discharge channel 34 at the gaps GP3 at the vehicle front side and rear side. As illustrated in Fig. 3, the smoke discharge channel 32 is configured including the first smoke discharge channel 34 and the second smoke discharge channel 36, with part of the first smoke discharge channel 34 being bypassed by the second smoke discharge channel 36.

The smoke discharge vent 52 is configured so as to perform valve-opening when the internal pressure of the first smoke discharge channel 34 is at least a specific value higher than the externally air pressure of the first smoke discharge channel 34. Namely, the smoke discharge vent 52 performs valve-opening when the internal pressure from smoke inflow into the first smoke discharge channel 34 has risen to the specific value or higher, and internal gas of the first smoke discharge channel 34 is discharged externally.

Furthermore, a membrane member 56 is also attached to the connector block 50. The membrane member 56 is configured to as to prevent passage of liquids (including vapor) while allowing gases to pass through. Moreover, the membrane member 56 is formed such that in cases in which gas passes therethrough, due to the membrane member 56 acting as a resistance to gas movement, such gas does not move all at once over a short period of time.

Next, description follows regarding the operation of the present exemplary embodiment.

In the vehicle 10 applied with the vehicle structure 12 of the present exemplary embodiment, the storage battery modules 20 are each configured from the plural storage battery cells 22. Namely, the plural storage battery cells 22 can be integrally configured by the storage battery modules 20.

The storage battery cells 22 are arranged in a row along the first direction (the vehicle front-rear direction) in each of the storage battery modules 20, and the storage battery modules 20 are arranged in a row along the second direction (the vehicle width direction). This thereby enables the plural storage battery cells 22 to be arranged efficiently in the first direction and the second direction. In particular, due to the array direction of the storage battery cells 22 in the storage battery modules 20 being the vehicle front-rear direction, the number of the storage battery cells 22 that can be placed in a single row is increased in comparison to configurations in which the storage battery cells 22 are arrayed in the vehicle width direction.

Although smoke is not generated in a normal state of the storage battery cells 22, in cases in which smoke has been generated for some reason or other, the smoke is discharged from a vehicle width direction central position on the lower face of the storage battery cells 22. The smoke then flows out to the first smoke discharge channel 34 configured by the gaps GP1 between the downward protrusions 30 of the lower case 24 and the lower face of the storage battery cell 22. Furthermore, the smoke flows to the smoke discharge vent 52 via the first smoke discharge channel 34 configured by the gap GP2, the first smoke discharge channel 34 configured by the gap GP3, and the first smoke discharge channel 34 configured by the gaps GP4. This smoke is then discharged from the smoke discharge vent 52 when the internal pressure of the first smoke discharge channel 34 is higher than the external pressure.

Moreover, the smoke discharge structure 16 of the present exemplary embodiment includes the membrane member 56. The membrane member 56 allows movement of gas with respect to the smoke discharge channel 32, and prevents the movement of liquids. For example, in cases in which the vehicle 10 has travelled to a location where the external pressure is different (for example a region at high altitude), a pressure difference between the internal pressure of the first smoke discharge channel 34 and the external pressure becomes greater. The pressure difference in such cases can be alleviated by the membrane member 56 allowing the passage of air.

The smoke discharge structure 16 of the present exemplary embodiment includes the second smoke discharge channel 36 in addition to the first smoke discharge channel 34. The second smoke discharge channel 36 bypasses part of the first smoke discharge channel 34 between the storage battery cell 22 and the smoke discharge vent 52. At the location where the second smoke discharge channel 36 is provided, a more extensive cross-sectional area can be secured for the channel allowing smoke flow than configurations that lack the second smoke discharge channel 36.

In the vehicle 10 of the present exemplary embodiment, the reinforcement members 40 are arranged in the gaps GP5 between the plural storage battery modules 20. The front ends 40A and the rear ends 40B of the reinforcement members 40 are respectively joined to the lower case 24 by the joining members 42. This thereby enables the storage battery case 28 to be reinforced using the reinforcement member 40.

The openings of the front ends 40A and the rear ends 40B of the reinforcement members 40 are in communication with the gaps GP2 configured between the lower case 24 and the respective joining members 42. The gaps GP2 are part of the first smoke discharge channel 34. This means that smoke that has inflowed into the first smoke discharge channel 34 also flows into the interior of the reinforcement members 40. The spaces surrounded by the reinforcement members 40 and the cell pedestals 44 are utilized as part of the smoke discharge channel 32. Namely, the interior of the reinforcement member 40 can be efficiently utilized as the second smoke discharge channel 36.

The joining members 42 extend in the vehicle width direction (second direction). This means that the front ends 40A and the rear ends 40B of the reinforcement members 40 can be joined to the lower case 24 over a given range in the vehicle width direction.

Moreover, due to the joining members 42 being extended in the vehicle width direction, the respective front ends 40A and rear ends 40B of plural of the reinforcement members 40 are joined to the lower case 24 by the joining members 42. This means a smaller number of the joining members 42 is sufficient compared to structures in which joining members 42 are employed individually to join the plural reinforcement members 40 to the lower case 24, enabling an increase in the number of components to be suppressed.

The storage battery modules 20 are housed in the lower case 24, and the storage battery modules 20 each include plural of the storage battery cells 22. Namely, a state can be maintained in which the plural storage battery cells 22 are integrally housed by the lower case 24. The lower case 24 configures part of the first channel member, enabling the number of components to be suppressed compared to configurations in which a first channel member is provided as a separate body to the lower case 24.

The first separation sections 42D are formed to the joining members 42. The first separation sections 42D configure the gaps GP2 between themselves and the lower case 24, and part of the first smoke discharge channel 34 is configured by the gaps GP2. Part of the first smoke discharge channel 34 can be configured by the first separation sections 42D of the joining member 42, enabling an increase in the number of components to be suppressed compared to configurations in which the first smoke discharge channel 34 is provided as a separate body to the joining member 42. The first separation sections 42D extend in the second direction, enabling realization of a structure in which the gaps GP2 configured by the first separation sections 42D and the lower case 24 also extend in the second direction.

The second separation portion 42E is formed to the joining member 42. The second separation portion 42E is contiguous to the first separation sections 42D, enabling smoke at the first separation sections 42D (gaps GP2) to be moved toward the smoke discharge vent 52. The second separation portion 42E also configures part of the first smoke discharge channel 34, enabling an increase in the number of components to be suppressed compared to configurations in which a member equivalent to the second separation portion 42E is provided as a separate body to the joining member 42.

The joining members 42 include the first join faces 42A and the second join faces 42C. The first join faces 42A are joined to the lower case 24 forming part of the first channel member, and the second join faces 42C are joined to the reinforcement members 40 forming part of the second channel member. This accordingly results in a state in which the joining members 42 make face-to-face contact with both the lower case 24 and the reinforcement members 40, enabling the joining members 42 to couple the lower case 24 and the reinforcement members 40 together strongly.

The first join faces 42A are provided at the two vehicle width direction (second direction) sides of the respective reinforcement members 40. The first join faces 42A of the joining members contact the reinforcement members 40 at the two vehicle width direction sides thereof, enabling the reinforcement members 40 to be joined to the lower case 24 more strongly than a structure in which contact is on one side only.

The openings 42M are formed to the joining members 42. The interior of the reinforcement members 40 and part of the first smoke discharge channel 34 (gaps GP2) are communicated with each other thereby. This thereby enables smoke to flow through the openings 42M at the gaps GP2 and the inside of the reinforcement members 40. The openings 42M are disposed between first join faces 42A that are provided as pairs. In other words, the first join faces 42A are positioned with respect to the reinforcement members 40 at the two vehicle width direction (second direction) sides of the openings 42M. The positions of the openings 42M do not displace with respect to the lower case 24, enabling a state of communication between the inside of the reinforcement members 40 and the gaps GP2 by the openings 42M to be reliably maintained.

The second join faces 42C are provided at the two vehicle width direction (second direction) sides with respect to the reinforcement members 40. This thereby enables the second join faces 42C to contact the reinforcement members 40 at both vehicle width direction sides of the reinforcement members 40, enabling the reinforcement members 40 to be joined to the lower case 24 more strongly than a structure in which contact is on one side only.

An object of the present disclosure is to utilize reinforcement members arranged between plural storage battery modules efficiently.

The present disclosure enables the reinforcement members arranged between plural storage battery modules to be utilized efficiently.

## Claims

1. A vehicle structure (12) comprising:
a plurality of storage battery modules (20), each including a plurality of storage battery cells (22) arranged in a row along a first direction, the plurality of storage battery modules being arranged with a spacing with respect to each other in a second direction orthogonal to the first direction;
a channel member (24,42) configuring part of a smoke discharge channel allowing a flow of smoke generated from the storage battery cells;
a reinforcement member (40) that extends along the first direction in the spacing between the storage battery modules and that has an interior in communication with the smoke discharge channel at a one-end and an other-end of the reinforcement member; and
joining members (42) that are disposed at the one-end and the other-end of the reinforcement member, and that each include a first join face (42A,42B) joined to the channel member and a second join face (42C) joined to the reinforcement member.

2. The vehicle structure of claim 1, wherein first join faces are provided as a pair joined to the channel member at both second direction sides of the reinforcement member.

3. The vehicle structure of claim 2, wherein the joining members each include an opening that communicates the interior of the reinforcement member between the first join faces, provided as a pair, with the smoke discharge channel.

4. The vehicle structure of claim 1, wherein second join faces are provided as a pair joined to the reinforcement member at both second direction sides of the reinforcement member.
